# EUROPÄISCHE PATENTSCHRIFT

(11) **EP 2 446 952 B1**
(45) Veröffentlichungstag und Bekanntmachung des Hinweises auf die Patenterteilung: **30.03.2016**
(21) Anmeldenummer: 11187557.1
(22) Anmeldetag: 02.11.2011
(51) Int. Cl.: B01D 41/04

(54) **Vorrichtung zum Reinigen eines Filters oder Katalysators**
Device for cleaning a filter or catalyst
Dispositif de nettoyage d'un filtre ou d'un catalyseur

(30) Priorität: 02.11.2010 AT 18022010
(43) Veröffentlichungstag der Anmeldung: 02.05.2012
(73) Patentinhaber: Hirtenberger Aktiengesellschaft, 2552 Hirtenberg (AT)
(72) Erfinder: Mayer, Hanspeter, 5421 Adnet (AT)
(74) Vertreter: Wirnsberger, Gernot

(56) Entgegenhaltungen:
- EP-A1- 1 369 161
- WO-A1-2009/136860
- CN-A- 101 402 013
- JP-A- 2004 113 979
- US-A- 5 915 439
- US-A1- 2009 056 288

## Beschreibung

Die Erfindung betrifft eine Vorrichtung zum Reinigen eines Gegenstandes wie eines Filters oder Katalysators, der von einem Gas durchströmbar ist, insbesondere eines in einem Abgastrakt eines Kraftfahrzeuges eingesetzten Partikelfilters oder Katalysators, umfassend ein verschließbares Gehäuse, eine innerhalb des Gehäuses angeordnete Basis, auf welcher oder mit welcher der Gegenstand positionierbar ist, und zumindest eine innerhalb des Gehäuses angeordnete Reinigungseinrichtung, mit welcher im Gegenstand adsorbierte Feststoffe und/oder Flüssigkeiten entfernbar sind.

In vielen Kraftfahrzeugen sind heute in einem Abgastrakt Filter und/oder Katalysatoren zum Reinigen von Abgasen vorgesehen. Hierzu zählen insbesondere Partikelfilter, mit welchen Rußpartikel aus einem Abgas eines dieselbetriebenen Kraftfahrzeuges ausgefiltert werden. Derartige Partikelfilter können während eines Betriebes aktiv oder passiv regeneriert werden. Dennoch ist es in regelmäßigen Abständen, z. B. nach einer Laufleistung von 50.000 km, erforderlich, insbesondere bei Lkws oder Baufahrzeugen, den Partikelfilter auszubauen und in einer hierfür geeigneten Vorrichtung möglichst vollständig zu regenerieren. Ähnliches gilt für Katalysatoren, die beispielsweise in Abgastrakten zur selektiven katalytischen Reduktion von Stickoxiden eingesetzt werden. Diese Katalysatoren sind wie Partikelfilter von einem Gas wie einem Abgas durchströmbar, verblocken allerdings in einem Kraftfahrzeug im Laufe der Zeit aufgrund von Beladung mit Asche oder beispielsweise, bei dieselbetriebenen Kraftfahrzeugen, auch Rußpartikeln.

Gegenwärtig bekannte Vorrichtungen zum Reinigen von Filtern und/oder Katalysatoren, die in einem Abgastrakt eines Kraftfahrzeuges eingesetzt sind, haben den Nachteil, dass nur eine mäßige und daher unbefriedigende Reinigungswirkung erzielt wird. Darüber hinaus kann mit bekannten Vorrichtungen auch keine Aussage bezüglich einer Qualität eines bereits längere Zeit im Einsatz stehenden Filters und/oder Katalysators getroffen werden. Auch ist ein Reinigungserfolg nicht überprüfbar.

Das Dokument US 2009/056288 A1 offenbart eine Reinigungsvorrichtung mit einer Reinigungskammer, in welcher ein zu reinigendes Filterelement auf einer Basis angeordnet werden kann.

Das Dokument EP 1 369 161 A1 offenbart eine Reinigungseinrichtung für Filter von Kraftfahrzeugen, wobei eine Waage vorgesehen ist.

Aus dem Dokument JP 2004 113979 A ist eine Vorrichtung zur Reinigung von Filtern bekannt geworden.

Aufgabe der Erfindung ist es, eine Vorrichtung der eingangs genannten Art bereitzustellen, bei welcher die Nachteile des Standes der Technik vermieden oder zumindest verringert sind.

Diese Aufgabe wird erfindungsgemäß gelöst, wenn bei einer Vorrichtung der eingangs genannten Art innerhalb des Gehäuses zumindest eine Waage mit welcher ein Gewicht des Gegenstandes vor einem Beginn eines Reinigungsprozesses feststellbar und während des Reinigungsprozesses eine durch die Reinigung verursachte Gewichtsabnahme des Gegenstandes kontinuierlich verfolgbar ist und eine Reinigungseinrichtung oberhalb und eine Reinigungseinrichtung unterhalb der Basis angeordnet ist, um den Gegenstand von zwei Seiten zu reinigen, und optional zumindest eine Einrichtung zum Erkennen von Fehlstellen wie Rissen und/oder Löchern im Gegenstand vorgesehen ist.

Ein mit einer erfindungsgemäßen Vorrichtung erzielter Vorteil ist insbesondere darin zu sehen, dass durch eine Waage vor einem Beginn eines Reinigungsprozesses ein Gewicht eines zu reinigenden Filters oder Katalysators feststellbar und während des Reinigungsprozesses eine durch die Reinigung verursachte Gewichtsabnahme verfolgbar ist. Tritt bei kontinuierlicher Verfolgung einer Gewichtsabnahme innerhalb einer vorgegebenen Zeitspanne keine weitere Gewichtsabnahme ein, kann der Reinigungsprozess beendet werden. Durch zumindest eine Einrichtung zum Erkennen von Fehlstellen wie Rissen und/oder Löchern im Gegenstand kann in vorteilhafter Weise festgestellt werden, ob der gereinigte Gegenstand noch vollständig funktionstüchtig ist oder gegebenenfalls, trotz Reinigung, ersetzt werden muss, weil zu viele Fehlstellen vorliegen. Beispielsweise ist es bei Filtern möglich, dass diese größere Risse oder Löcher aufweisen, sodass für an sich auszufilternde Rußpartikel im Filter selbst ein Bypass gebildet ist und eine Reinigungswirkung des Filters im erforderlichen Ausmaß nicht mehr vorliegt. In diesem Fall ist der Filter trotz Reinigung nicht mehr für einen weiteren Einsatz brauchbar. Ist sowohl eine Waage zur Feststellung des Gewichtes des Gegenstandes als auch eine (Prüf-)Einrichtung zum Erkennen von Fehlstellen des Gegenstandes vorgesehen, z. B. Risse, Löcher oder Verblockungen, kann einerseits eine vollständige Reinigung und andererseits eine Funktionstüchtigkeit des Gegenstandes mit einer einzigen Vorrichtung bzw. in einem einzigen Prozess sichergestellt werden. Durch eine Anordnung von Reinigungseinrichtungen oberhalb und unterhalb der Basis kann der zu reinigende Gegenstand beispielsweise von zwei Seiten mit Druckluft beaufschlagt und somit besonders effizient gereinigt werden.

Von Vorteil ist es, wenn das Gehäuse einen Sockel aufweist, auf dem ein oberes Gehäuseteil befestigt ist, wobei die Basis im oberen Gehäuseteil angeordnet ist. Dies ermöglicht sowohl eine gute Hantierbarkeit bei der Einbringung des zu reinigenden Gegenstandes in die Vorrichtung als auch eine kompakte Bauweise. Der Sockel kann beispielsweise mit einer Höhe von 70 bis 100 cm ausgeführt sein. Der Gegenstand lässt sich dann ohne Bücken auf der Basis anordnen. Im Sockel wiederum können einzelne Komponenten angeordnet sein, deren Funktion bei einer Reinigung des Gegenstandes benötigt wird. Somit ist ein vorgegebener Bauraum optimal genützt. In diesem Zusammenhang weist das obere Gehäuseteil vorzugsweise einen vertikal verschiebbaren oder öffenbaren Mantel auf, sodass die Basis zugänglich ist. Grundsätzlich ist es ausreichend, dass der Mantel öffenbar ist, um den Gegenstand für die Reinigung in die Vorrichtung einbringen zu können. Besonders vorteilhaft ist es jedoch, wenn der Mantel als Ganzes vertikal verschiebbar ist. Die Basis ist dann von allen Seiten zugänglich, was im Hinblick auf ein einfaches Einbringen des Gegenstandes in die Vorrichtung günstig ist. Dabei ist es besonders bevorzugt, dass der Sockel mit einem geringeren Querschnitt als der Mantel ausgebildet und der Mantel über den Sockel nach unten verschiebbar ist. Möglich ist es zwar auch, dass der Mantel nach oben verschoben werden kann, was allerdings im ausgefahrenen bzw. nach oben geschobenen Zustand des Mantels eine größere Bauhöhe der Vorrichtung mit sich bringt. Ist hingegen der Mantel nach unten über den Sockel verschiebbar, ist eine gute Zugänglichkeit der Basis gegeben, ohne dass sich die Höhe der Vorrichtung beim Verschieben des Mantels ändern würde. Es kann auch vorgesehen sein, dass der Mantel über eine in den Mantel integrierte Schwenktüre öffenbar ist. Dadurch wird eine konstruktiv besonders einfache Art der Zugänglichkeit erreicht. Bevorzugt werden dann zwei symmetrisch zueinander öffenbare Schwenktüren ausgeführt. Um eine einfache Zugänglichkeit der Basis zu erreichen, ist diese bei einer Ausführung des Mantels mit einer oder mehreren Schwenktüren ausfahrbar, insbesondere auf Stahlprofilen ausfahrbar, ausgebildet.

An eine Ausbildung des Mantels an sich werden keine besonderen Anforderungen gestellt. Zweckmäßigerweise ist der Mantel jedoch durchsichtig ausgebildet, sodass ein Reinigungsprozess beobachtbar ist und bei festgestellten Komplikationen der Reinigungsprozess manuell abgebrochen werden kann. Für eine durchsichtige Ausbildung des Mantels ist dieser zweckmäßigerweise aus einem Kunststoff wie einem Polycarbonat gefertigt. Für einen dichten Abschluss nach oben hin weist das obere Gehäuseteil eine kopfseitige Deckplatte auf, die mit dem Sockel starr verbunden ist und einen dichtenden Anschlag für den Mantel bildet. Die starre Verbindung oder gegebenenfalls starren Verbindungen zwischen Deckplatte und Sockel dienen zweckmäßigerweise gleichzeitig als Führungen für den Mantel beim Verschieben bzw. als Führungsschienen.

Die Basis kann auf beliebige Art ausgebildet sein, solange diese geeignet ist, den zu reinigenden Gegenstand aufzunehmen. Bevorzugt umfasst die Basis einer einfachen Ausbildung wegen eine waagrechte Auflagefläche zur Positionierung des Gegenstandes. Der zu reinigende Gegenstand ist dann bloß auf die Auflagefläche zu stellen. Zusätzlich kann vorgesehen sein, dass seitlich der Auflagefläche ein oder mehrere Befestigungsmittel zur Fixierung des Gegenstandes vorgesehen sind. Dadurch kann vermieden werden, dass sich der Gegenstand während einer Reinigung mit Druckluft bewegt. Die vorgesehene Auflagefläche kann teilweise licht- und gasdurchlässig sein. Eine Gasdurchlässigkeit ist zweckmäßig, damit der zu reinigende Gegenstand im Bereich eines oberen Endes beispielsweise mit Druckluft beaufschlagt werden kann und die durch den Gegenstand hindurchtretende Druckluft an einem unteren Ende des Gegenstandes austreten und durch die Auflagefläche hindurchtreten kann, worauf die durch den Gegenstand geblasene Druckluft samt entfernten Feststoffen und/oder Flüssigkeiten in den Sockel gelangt, aus dem die Druckluft, gegebenenfalls nach Reinigung, abgeführt wird. Hierfür ist die Auflagefläche zweckmäßigerweise als Gitter ausgebildet. Die Auflagefläche kann gleichzeitig auch als Waage fungieren, wenn die Auflagefläche auf entsprechenden Sensoren gelagert ist. Eine Ausbildung der Auflagefläche in lichtdurchlässiger Form, insbesondere als Gitter, erweist sich als besonders zweckmäßig, wenn unterhalb der Auflagefläche zumindest eine Lichtquelle zur Bestrahlung eines unteren Endes des Gegenstandes vorgesehen ist und im Gehäuse oberhalb der Auflagefläche zumindest ein Spiegel angeordnet ist, mit welchem ein oberes Ende des Gegenstandes bei Bestrahlung des unteren Endes des Gegenstandes außerhalb des Gehäuses beobachtbar ist. Bei entsprechender Bestrahlung eines Gegenstandes kann dann außerhalb des Gehäuses beobachtet werden, ob im Bereich des oberen Endes des Gegenstandes Licht austritt bzw. eine unregelmäßige Lichtintensität gegeben ist. Dies erlaubt es, auf die Risse und/oder Löcher bzw. allgemein einsatzbedingte Verschleißerscheinungen zu schließen. Ist der Mantel durchsichtig ausgebildet, sind keine besonderen Maßnahmen erforderlich, um eine entsprechende Beobachtung außerhalb des Gehäuses bzw. der Vorrichtung durchführen zu können. Ist der Mantel hingegen nicht durchsichtig ausgebildet, ist zumindest ein kleines Sichtfenster im Mantel vorhanden, sodass die entsprechende Beobachtung bzw. Prüfung erfolgen kann. Alternativ kann auch vorgesehen sein, dass unterhalb der Auflagefläche zumindest eine Lichtquelle zur Bestrahlung eines unteren Endes des Gegenstandes vorgesehen ist und im Gehäuse oberhalb der Auflagefläche zumindest eine Kamera oder ein lichtempfindlicher Sensor angeordnet ist, mit welcher bzw. mit welchem ein Bild des oberen Endes des Gegenstandes bei Bestrahlung des unteren Endes des Gegenstandes aufnehmbar und außerhalb des Gehäuses auf einem Display darstellbar ist. Die zumindest eine Lichtquelle ist in beiden Alternativen bevorzugt dreh- und/oder schwenkbar gelagert, sodass sich diese während eines Reinigungsprozesses in einer Parkposition befinden kann, nach Abschluss des Reinigungsprozesses aber in eine aktive Position zur Bestrahlung des unteren Endes des gereinigten Gegenstandes bringbar ist. Dadurch ist sichergestellt, dass die zumindest eine Lichtquelle weder verschmutzt wird noch während eines Reinigungsprozesses in einer Strömungsrichtung der Druckluft befindlich ist.

Für eine Reinigung weist die Reinigungseinrichtung vorteilhafterweise eine oder mehrere oberhalb und/oder unterhalb der Basis angeordnete Druckluftdüsen auf, die in einer Ebene über oder unter der Basis bewegbar gelagert sind und mit einem Druckluftreservoir zur Anspeisung der Druckluftdüsen in Verbindung stehen. Der zu reinigende Gegenstand kann dann in einfacher Weise mit Druckluft beaufschlagt werden, um in diesem adsorbierte Feststoffe und/oder Flüssigkeiten wirkungsvoll zu entfernen. Um eine gesamte kopfseitige und/oder bodenseitige Fläche eines zu reinigenden Gegenstandes bzw. dessen oberes und unteres Ende vollständig mit Druckluft beaufschlagen zu können, sind die Druckluftdüsen mittelbar oder unmittelbar an einer drehbaren oder schwenkbaren Achse gelagert. Sofern die Achse drehbar ist, kann diese um 360° rotieren, sodass ein zu reinigender Gegenstand, der in der Regel als runder Filter oder Katalysator vorliegt, kopfseitig und/oder bodenseitig vollständig mit Druckluft beaufschlagt werden kann, um eine effiziente Reinigung zu erreichen. Eine schwenkbare Ausbildung der Achse bietet insofern Vorteile, als die Druckluft vom Druckluftreservoir über Schläuche zu den Druckluftdüsen zugeführt wird, was eine Rotation der Achse technisch aufwendig macht. Bei einer schwenkbaren Ausbildung ist es ausreichend, dass ein Schwenkwinkel von bis zu 180° gegeben ist, wenngleich dieser Winkel auch zumindest geringfügig größer sein kann. Die Achse schwenkt dann zwischen zwei Endpositionen hin und her, sodass ebenfalls der zu reinigende Gegenstand kopfseitig und/oder bodenseitig vollständig mit Druckluft beaufschlagbar ist, ohne dass sich jedoch die Druckluftzuführungen verdrillen können. Besonders bevorzugt ist es, dass die Druckluftdüsen über schwenkbare Gelenkstäbe an der Achse gelagert sind. Dies erlaubt es, mit einem Minimum von Druckluftdüsen auszukommen, da diese nicht nur im Kreis oder hin und her bewegbar sind, sondern während einer Dreh- bzw. Schwenkbewegung auch radial verfahren werden können. In diesem Zusammenhang ist es besonders bevorzugt, dass zwei Gelenkstäbe mit jeweils einer Druckluftdüse vorgesehen sind, wobei die Gelenkstäbe endseitig an der Achse gelagert sind und vorzugsweise pneumatisch betätigte Kolben-Zylinder-Einheiten vorgesehen sind, die an der Achse befestigt sind und mit den Gelenkstäben in Verbindung stehen, um diese zu schwenken. In diesem Fall kann mit lediglich zwei gegenüberliegend an Enden der Achse über Gelenkstäbe befestigten Druckluftdüsen eine gesamte kopfseitige oder bodenseitige Fläche eines zu reinigenden Gegenstandes überstrichen werden, wenn die Druckluftdüsen während der Dreh- bzw. Schwenkbewegung gleichzeitig konstant radial eingefahren und anschließend wieder ausgefahren werden. Die Druckluftdüsen sind hierfür zweckmäßigerweise an einem freien Ende der Gelenkstäbe angeordnet. Es ergeben sich dann für eine projizierte Bewegung der Druckluftdüsen über einer beaufschlagten Fläche spiralförmige Bahnen, die von einem Rand der Fläche bis zu einem Zentrum reichen.

Es kann auch vorgesehen sein, dass innerhalb des Gehäuses ein Beschriftungsgerät zum Kennzeichnen des Gegenstandes angeordnet ist. Dies erlaubt es, die gereinigten Gegenstände beispielsweise mit einem Prüfsiegel als gereinigt und funktionstüchtig auszuweisen. Außerdem können, insbesondere wenn zusätzlich ein Lesegerät innerhalb des Gehäuses vorgesehen ist, das mit dem Beschriftungsgerät kombiniert sein kann, Daten eines zu reinigenden Gegenstandes mit bereits vorliegenden Daten verglichen werden. Die bereits vorliegenden Daten können sich beispielsweise auf ein Gewicht des Gegenstandes im ursprünglichen Zustand, also vor einem ersten Einsatz, oder nach einer vorhergehenden Reinigung beziehen. Es ist dann möglich, eine allfällige dauerhafte Gewichtszunahme, die durch einen Reinigungsprozess nicht behebbar ist, festzustellen, was wiederum im Hinblick auf eine Funktionstüchtigkeit des Gegenstandes wichtig ist.

Wie erwähnt wird der Gegenstand in der Regel mit Druckluft gereinigt, was für viele Fälle ausreichend ist. Es kann jedoch auch vorkommen, dass sich ein Teil anhaftender Feststoffe bei bloßer Beaufschlagung mit Druckluft nur durch lange Reinigungsprozesse oder gar nicht entfernen lässt. Für solche Fälle kann es zweckmäßig sein, dass im Gehäuse zumindest eine auf dem Gegenstand anstellbare Einrichtung zum Durchblasen eines heißen Gases durch den Gegenstand vorgesehen ist. Die anstellbare Einrichtung, die beispielsweise in Form einer Glocke ausgebildet sein kann, wird dann auf den Gegenstand angestellt und der Gegenstand mit einem heißen Gas beaufschlagt, beispielsweise um größere Ansammlungen von Rußpartikeln in einem Porensystem eines Filters zu verbrennen und so ein zumindest teilweise blockiertes Porensystem wieder freizulegen.

Natürlich können die Druckluftdüsen auch zum Reinigen des Gegenstandes mit einem alternativen Gas genutzt werden. So kann es zweckmäßig sein, den Gegenstand mit einem CO₂-Gas zu reinigen. Bewährt hat sich, ein CO₂-Gas mit Resten einer festen Phase, die auch als CO₂-Trockeneis bezeichnet wird, einzusetzen. Damit lassen sich Partikel entfernen, die mit anderen Methoden teilweise nur schwer entfernbar sind.

Weiter hat sich eine Verwendung von Wasserdampf als Reinigungsgas als vorteilhaft erwiesen, da dieser besonders einfach herstellbar ist und vorteilhafte Reinigungseigenschaften aufweist. Auch eine Kombination von verschiedenen Gasen ist möglich, um einen optimalen Reinigungseffekt zu erzielen.

Für Prüf- und Diagnosezwecke können zusätzlich eine Einrichtung zum Einblasen von Partikeln an einem oberen Ende des Gegenstandes und eine Messeinrichtung zur Messung von an einem unteren Ende des Gegenstandes austretenden Partikeln vorgesehen sein. Dadurch ist es möglich, einen gereinigten Gegenstand in Bezug auf eine Partikeladsorption zu prüfen. Dies ist insbesondere zur Feststellung einer Funktionstüchtigkeit von Rußpartikelfiltern zweckmäßig.

Im Sockel können wie bereits erwähnt Komponenten angeordnet sein, welche für einen Reinigungsprozess, insbesondere mittels Druckluft, erforderlich sind. Insbesondere kann im Sockel ein Filter und diesem nachgeordnet ein Unterdruckgebläse angeordnet sein, sodass die in das Gehäuse zur Reinigung eingeführte Druckluft abgesaugt und aus dem Sockel abgeführt werden kann. Der vorgeschaltete Filter sorgt für eine Reinigung der abgesaugten Luft, sodass die aus einem gereinigten Gegenstand ausgeblasenen Feststoffe und/oder Flüssigkeiten nicht in die Umwelt gelangen. Im Übrigen kann bodenseitig auch ein Staubsammelbehälter vorgesehen sein, wobei der Staubsammelbehälter unterhalb des Filters angeordnet ist.

Die Vorrichtung als Ganzes ist bevorzugt zylinderförmig ausgebildet und weist mit Vorteil eine Bauhöhe von etwa 100 bis 180 cm auf.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine perspektivische Darstellung einer erfindungsgemäßen Vorrichtung;
Fig. 2 einen oberen Teil einer erfindungsgemäßen Vorrichtung;
Fig. 3 einen oberen Teil einer erfindungsgemäßen Vorrichtung mit ausgeklappter Auflagefläche;
Fig. 4 eine perspektivische Darstellung eines Teils einer erfindungsgemäßen Vorrichtung mit positionierter Auflagefläche;
Fig. 5 eine perspektivische Ansicht eines oberen Teils einer erfindungsgemäßen Vorrichtung bei ausgeklappter Auflagefläche;
Fig. 6 Befestigungsmittel zum Halten eines Gegenstandes in querschnittlicher Darstellung;
Fig. 7 eine Draufsicht auf Befestigungsmittel samt befestigtem Gegenstand;
Fig. 8 eine auf Gewichtssensoren gelagerte Auflagefläche;

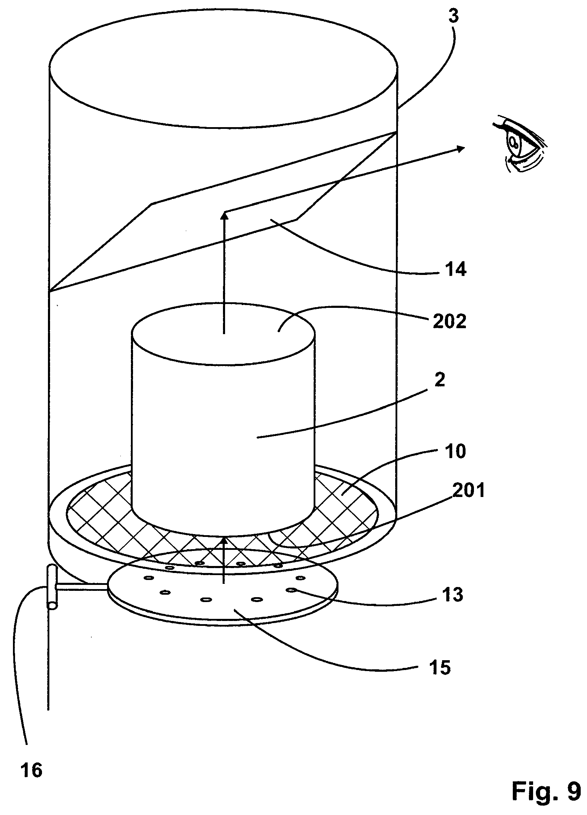

Fig. 9 einen Mechanismus zur Durchlichtprüfung eines Gegenstandes;
Fig. 10 eine Reinigungseinrichtung;
Fig. 11 eine Projektion der von einer Reinigungsvorrichtung gemäß Fig. 10 im Einsatz erzeugten Luftstrahlen;
Fig. 12 eine Vorrichtung zur Beschriftung eines Gegenstandes;
Fig. 13 eine Partikeleinblaseinrichtung samt zugehöriger Messeinrichtung;
Fig. 14 eine Einrichtung zur Beaufschlagung eines Filters mit Heißluft;
Fig. 15 eine Darstellung eines Sockels einer erfindungsgemäßen Vorrichtung;
Fig. 16 eine Dichtungsanordnung im Bereich einer kopfseitigen Deckplatte einer erfindungsgemäßen Vorrichtung;
Fig. 17 eine Dichtungsanordnung im Bereich eines unteren Endes eines Mantels.

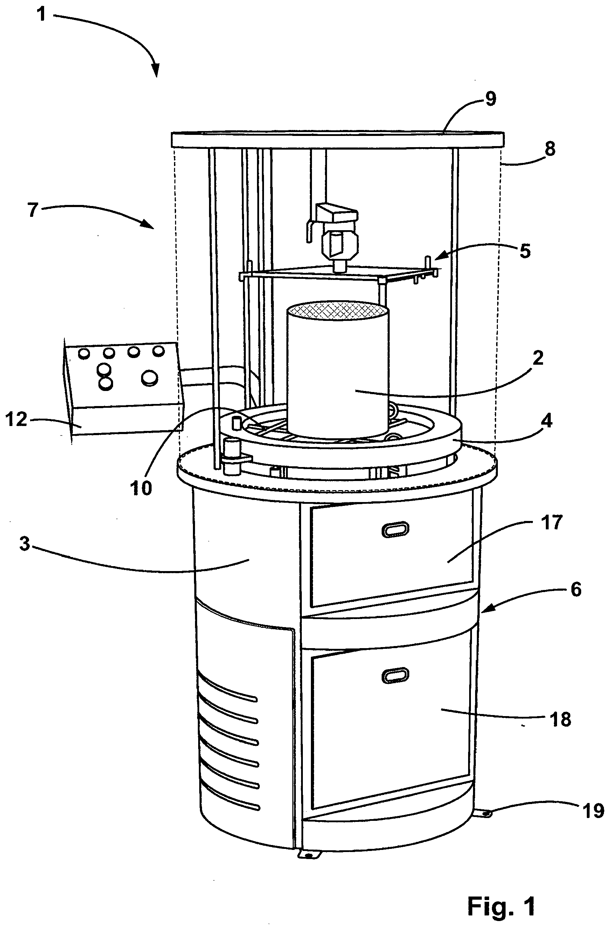

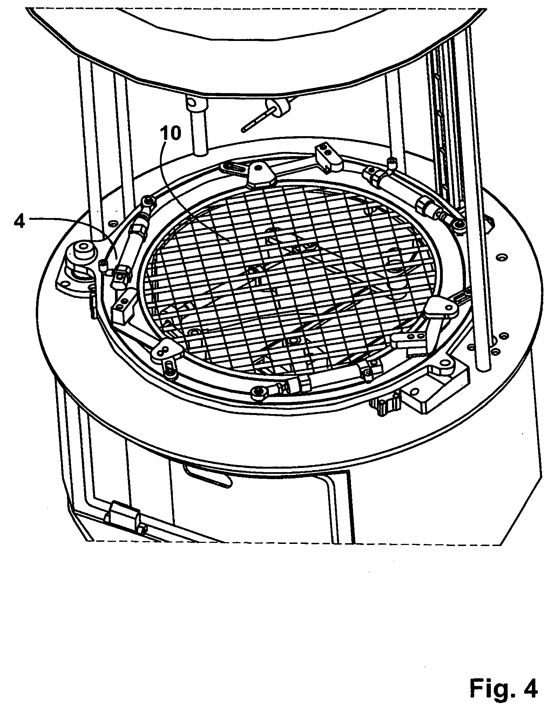

In Fig. 1 bis 5 ist eine erfindungsgemäße Vorrichtung 1 beispielhaft dargestellt. Die Vorrichtung 1 ist als Anlage zum Reinigen und zur Diagnose von Filtern und Katalysatoren konzipiert, die in Kraftfahrzeugen, insbesondere Lkws oder Baufahrzeugen, verwendet werden und bei diesen im Abgastrakt eingebaut sind. Die Vorrichtung 1 kann aber ganz allgemein zur Reinigung und Diagnose des Zustandes von mit einem Gas durchströmbaren Filterelementen eingesetzt werden. Mögliche weitere Einsatzgebiete betreffen beispielsweise Filter von Brenn- und Heizanlagen, die ebenso wie in Kraftfahrzeugen eingesetzte Filter in regelmäßigen Abständen einer Wartung unterzogen werden müssen.

Die zylinderförmige Vorrichtung 1 umfasst einen Sockel 6, auf dem ein oberes Gehäuseteil 7 angeordnet ist. Die Vorrichtung 1 weist in der Regel eine Höhe von etwa 100 bis 180 cm auf, wobei sich der Sockel 6 etwa bis auf eine halbe Höhe erstreckt. Das obere Gehäuseteil 7 umfasst außenseitig einen Mantel 8, der bevorzugt durchsichtig ausgebildet ist, um einen Blick in das Innere der Vorrichtung 1 zu ermöglichen, insbesondere auf einen zu reinigenden Gegenstand 2. Der Mantel 8 kann hierfür aus einem durchsichtigen Kunststoff, beispielsweise einem Polycarbonat, oder aus Glas gebildet sein. Das obere Gehäuseteil 7 ist durch eine kopfseitige Deckplatte 9 abgeschlossen. Das obere Gehäuseteil 7 bildet zusammen mit einer Verkleidung des Sockels 6 zusammen ein Gehäuse 3.

Damit der zu reinigende Gegenstand 2 innerhalb des Gehäuses 3 positioniert werden kann, kann der Mantel 8 eine verschließbare Öffnung aufweisen. Beispielsweise kann der im Querschnitt kreisrund ausgeführte Mantel 8 mit einer Tür ausgebildet sein. Bevorzugt ist es jedoch, dass der Mantel 8 einen geringfügig größeren Querschnitt als der Sockel 6 aufweist und über diesen nach unten vertikal verfahrbar ist, um das Gehäuse 3 im Bereich des oberen Gehäuseteils 7 freizugeben. Der Gegenstand 2 kann dann ohne Weiteres im Inneren der Vorrichtung 1 positioniert werden, zumal der Mantel 8 maximal eine gleiche Höhe aufweist wie der Sockel 6 und somit mit seinem oberen Ende bis zu einem oberen Ende des Sockels 6 vertikal verfahren werden kann. Zu diesem Zweck ist der Mantel 8 an Führungsschienen gelagert, die gleichzeitig die kopfseitige Deckplatte 9 mit dem Sockel 6 starr verbinden. Wenn der Mantel 8 wie im Ausführungsbeispiel im Querschnitt kreisrund ausgebildet ist, sind zweckmäßigerweise drei Führungsschienen vorgesehen, die vom Zentrum des Gehäuses 3 bzw. einer Längsachse desselben aus betrachtet in einem Winkel von 120° zueinander versetzt sind. Dadurch ist eine stabile Führung des Mantels 8 beim Verschieben gewährleistet. Damit auch der Sockel 6 innenseitig zugänglich ist, weist dieser zwei nach unten oder gegebenenfalls auch zur Seite hin aufklappbare Türen 17, 18 auf.

Der Sockel 6 umfasst bodenseitig auskragende Befestigungslaschen 19 mit Öffnungen. An diesen Befestigungslaschen 19 kann der Sockel 6 bzw. die Vorrichtung 1 ortsfest befestigt werden. Möglich ist es auch, dass die Vorrichtung 1 alternativ oder zusätzlich bodenseitig Roll- oder Gleitelemente aufweist, sodass die Vorrichtung 1 innerhalb eines Betriebsgeländes einfach transportierbar ist.

Des Weiteren ist ein in Fig. 1 stark schematisiertes Bedien- und Steuerpult 12 vorgesehen, das an einer Rückseite des Sockels 6 an der Vorrichtung 1 befestigt ist. Mit dem Bedien- und Steuerpult 12 können Prozesse innerhalb der Vorrichtung 1 bzw. des Gehäuses 3 gesteuert werden. Zur Darstellung von Daten weist das Bedien- und Steuerpult 12 zusätzlich ein nicht dargestelltes Display auf.

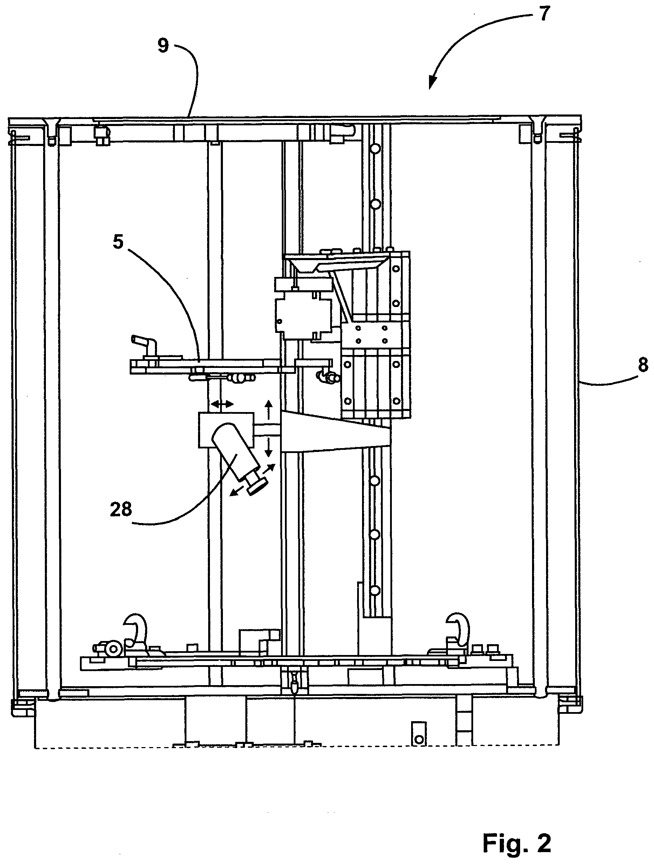

Wie in Fig. 2 ersichtlich, ist im oberen Teil der Vorrichtung 1 eine Beobachtungseinrichtung 28 angeordnet, die vorzugsweise höhenverstellbar, schwenkbar und in einer Ebene senkrecht zur Längsachse der Vorrichtung 1 bewegbar ist. Die Beobachtungseinrichtung 28, z. B. eine Kamera, dient einer optischen Erfassung eines zu reinigenden Gegenstandes 2 und kann auch zum Erkennen von Fehlstellen am Gegenstand 2 eingesetzt werden. Die Beobachtungseinrichtung 28 ist vorzugsweise ebenfalls vom Bedien- und Steuerpult 12 aus steuerbar.

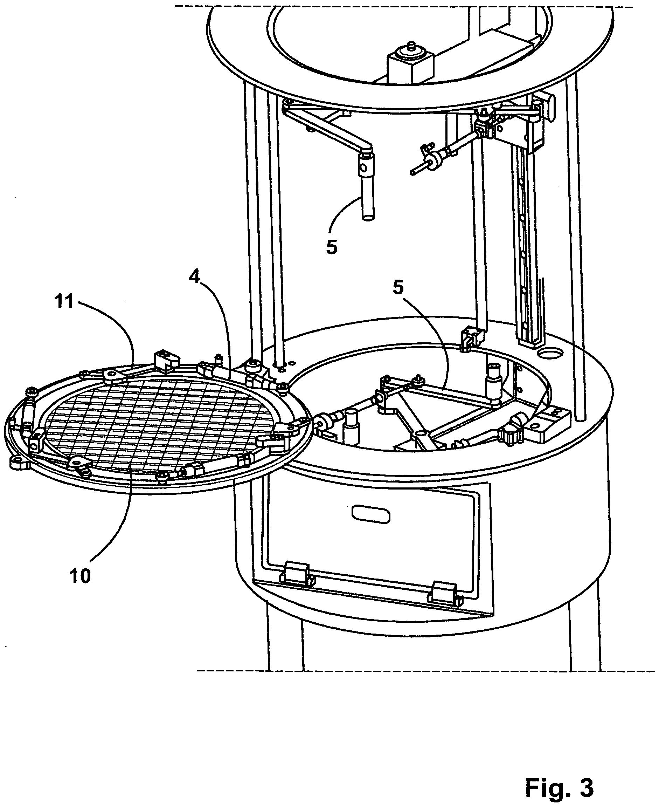

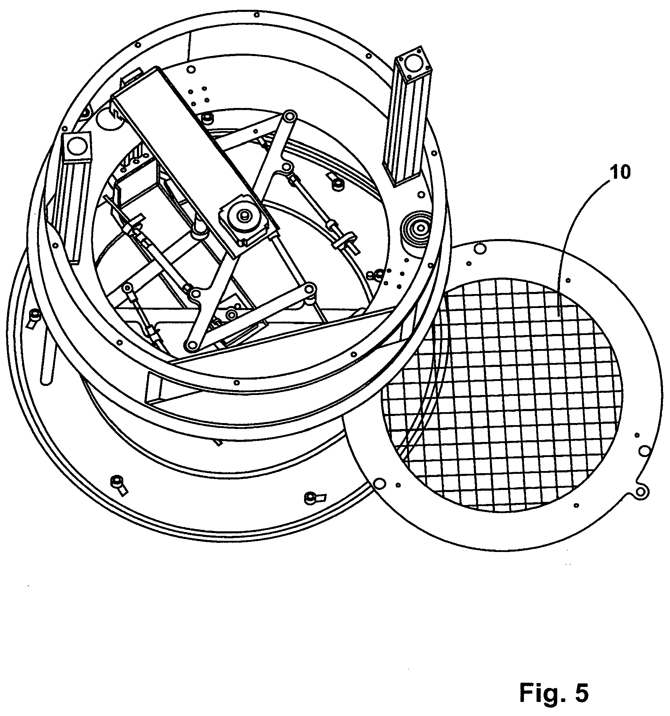

Um einen zu reinigenden Gegenstand 2 in der Form eines Filters oder Katalysators von anhaftenden Feststoffen und/oder Flüssigkeiten zu befreien, ist eine Reinigungseinrichtung 5 vorgesehen, die an der kopfseitigen Deckplatte 9 und/oder den seitlichen Führungsschienen befestigt ist. Mit der Reinigungseinrichtung 5, die nachstehend noch im Detail erläutert wird, kann der zu reinigende Gegenstand 2 mit Druckluft beaufschlagt werden, sodass insbesondere anhaftende Partikel zumindest weitgehend entfernbar sind. Eine derartige Reinigungseinrichtung 5 ist vorteilhafterweise sowohl über einer Basis 4 mit einer Auflagefläche 10, auf welcher der Gegenstand 2 für die Reinigung und zu Diagnosezwecken positioniert wird, als auch unterhalb der Basis 4 bzw. Auflagefläche 10 vorgesehen. Möglich ist es aber auch, dass insbesondere nur eine obere Reinigungseinrichtung 5 vorgesehen ist, unter welcher der Gegenstand 2 für die Reinigung positioniert wird. Die Auflagefläche 10 ist als Gitter bzw. gitterförmig ausgebildet, sodass aus dem Gegenstand 2 austretende Druckluft nach unten in den Sockel 6 entweichen kann. Die Basis 4 mit der Auflagefläche 10 kann für eine leichtere Positionierung des Gegenstandes 2 aus dem Gehäuse 3 schwenkbar gelagert sein, wie es beispielsweise in Fig. 3 oder 5 ersichtlich ist. Dies erlaubt es, den Gegenstand 2 in besonders einfacher Weise auf die waagrechte Auflagefläche 10 zu stellen. In diesem Zusammenhang können auch Befestigungsmittel 11 vorgesehen sein, die auf der Basis 4 seitlich der waagrecht ausschwenkbaren Auflagefläche 10 vorteilhafterweise mit konstantem Abstand voneinander angeordnet sind. Dadurch kann der Gegenstand 2 während einer Reinigung bei Einwirken von Druckluft oder gegebenenfalls auch Stößen in einer gewünschten Position gehalten werden. Darüber hinaus ist auch eine Zentrierung des Gegenstandes entlang der Längsachse der Vorrichtung 1 möglich.

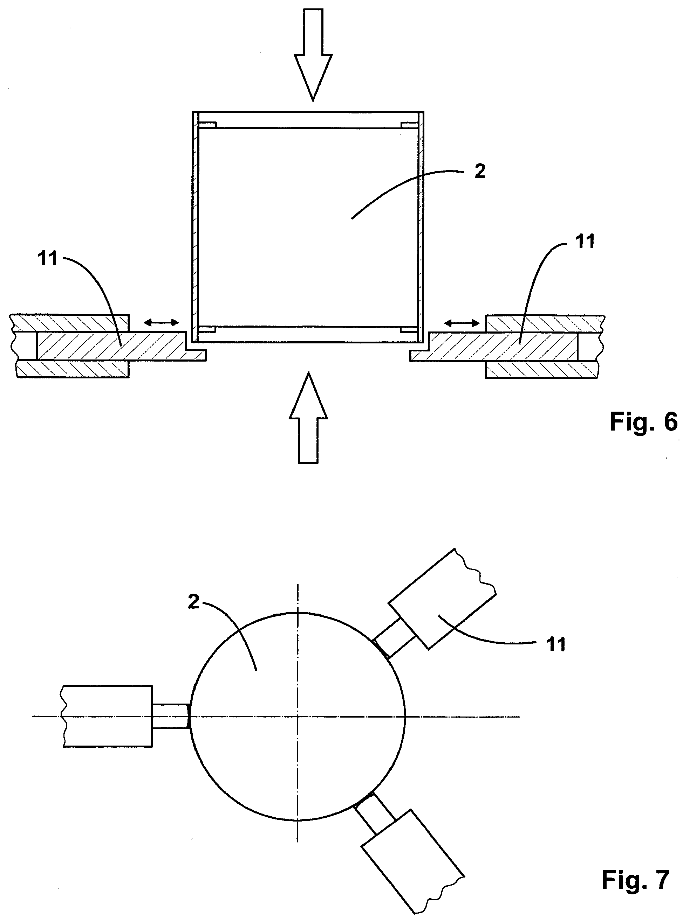

In Fig. 6 und 7 sind einfache Beispiele von Befestigungsmitteln 11 gezeigt, welche in einem Winkel von 120° zueinander angeordnet sind und sich insbesondere für die üblicherweise runden Filter oder Katalysatoren eignen. Die Befestigungsmittel 11 weisen jeweils ein radial an den Gegenstand 2 anstellbares Endstück auf, sodass der Gegenstand 2 positionsstabil fixierbar ist, ohne dass eine untere Fläche desselben blockiert wäre. Die Endstücke der Befestigungsmittel 11 können hydraulisch oder pneumatisch betätigbar sein. Möglich ist es aber auch, dass anstellbare Schrauben oder andere rein mechanisch wirkende Befestigungsmittel 11 vorgesehen sind.

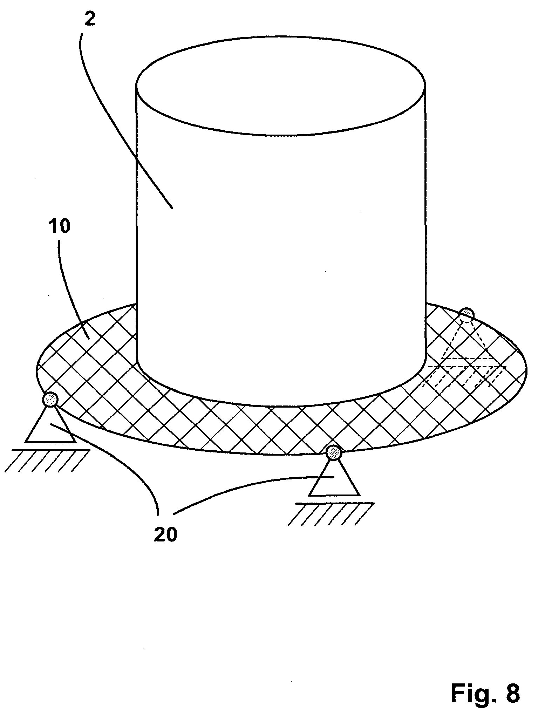

Um insbesondere auch Aussagen über einen qualitativen Zustand des zu reinigenden Gegenstandes 2 vor, während und nach einem Reinigungsprozess zu erhalten, kann die Basis 4 mit einer Waage ausgebildet oder auf einer Waage gelagert sein. Möglich ist es beispielsweise, wie in Fig. 8 dargestellt, dass die Auflagefläche 10, auf welcher der Gegenstand 2 während eines Reinigungsprozesses positioniert ist, auf drei in einem Winkel von 120° zueinander versetzt angeordneten Gewichtssensoren gelagert ist. Es kann dann ein Gewicht des Gegenstandes 2 vor, aber auch während des Reinigungsprozesses festgestellt und verfolgt werden.

Zu Diagnosezwecken kann des Weiteren vorgesehen sein, dass unterhalb der gitterförmig ausgebildeten Auflagefläche 10 zumindest eine Lichtquelle 13 vorgesehen ist, mit welcher ein unteres Ende 201 des Gegenstandes 2 mit Licht bestrahlbar ist. Die zumindest eine Lichtquelle 13 kann ein Scheinwerfer sein. Möglich ist es auch, dass anstelle einer Lichtquelle 13 eine Vielzahl von Lichtquellen 13 in Form von Leuchtdioden vorgesehen ist, sodass eine homogene Beleuchtung des unteren Endes 201 des Gegenstandes 2 gegeben ist. Die zumindest eine Lichtquelle 13 ist auf einer Platte 15 angeordnet, die mit einer dreh- und/oder schwenkbaren Halterung 16 am Sockel 6 montiert ist. Ein Bewegen der Halterung 16 bzw. ein Drehen und/oder Schwenken der Platte 15 und damit der zumindest einen Lichtquelle 13 ist von außerhalb des Gehäuses 3 möglich, insbesondere über das Bedien- und Steuerpult 12, sodass die Platte 15 samt der zumindest einen Lichtquelle 13 während einer Reinigung des Gegenstandes 2 zur Seite gedreht und/oder geschwenkt werden kann, bei Bedarf, zu Diagnosezwecken, aber in eine hierfür erforderliche Position bringbar ist. Gegenüberliegend der zumindest einen Lichtquelle 13 bzw. der Platte 15, zur kopfseitigen Deckplatte 9 hin betrachtet, ist ein ebenfalls dreh- und/oder schwenkbarer Spiegel 14 beispielsweise an einer der Führungsschienen oder der kopfseitigen Deckplatte 9 befestigt. Der Spiegel 14 lässt sich so in Position bringen, dass bei Bestrahlung des unteren Endes 201 des Gegenstandes 2 ein oberes Ende 202 des Gegenstandes 2 außerhalb der Vorrichtung 1 beobachtbar ist. Dies ist ohne Weiteres möglich, zumal der Mantel 8 durchsichtig ist. Sofern der Mantel 8 nicht aus einem durchsichtigen Material wie einem durchsichtigen Kunststoff oder Glas gefertigt ist, ist hierfür ein Sichtfenster vorgesehen. Anstelle des Spiegels 14 können auch eine Kamera oder ein oder mehrere lichtempfindliche Sensoren vorgesehen sein, wobei das von der Kamera bzw. den Sensoren aufgenommene Bild des oberen Endes 202 des Gegenstandes 2 zweckmäßigerweise am Bedien- und Steuerpult 12 dargestellt wird, über das auch die Platte 15 mit der zumindest einen Lichtquelle 13 und der Spiegel 14 bzw. die Kamera oder die lichtempfindlichen Sensoren in Position bringbar sind.

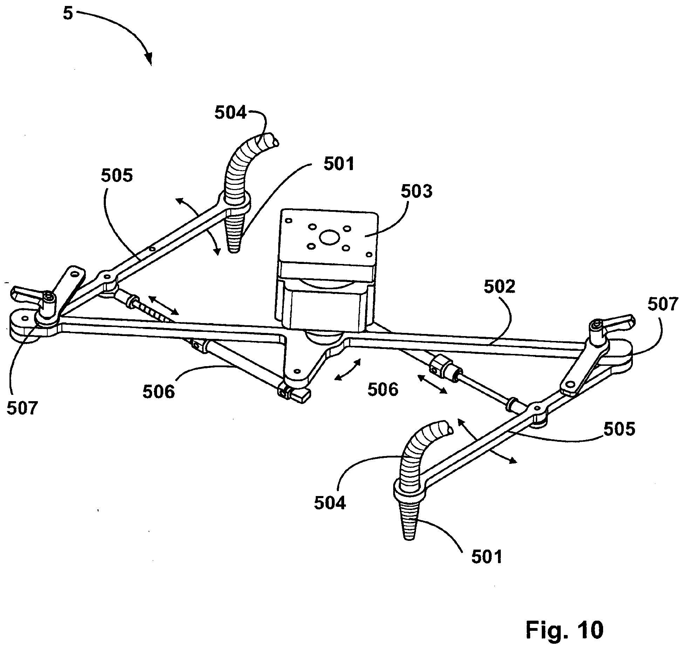

In Fig. 10 ist die Reinigungseinrichtung 5, die in Fig. 1 oberhalb des Gegenstandes 2 positioniert ist, näher dargestellt. Eine analoge zweite Reinigungseinrichtung 5 befindet sich unterhalb der Auflagefläche 10, wobei diese zweite Reinigungseinrichtung 5 gegenüber der in Fig. 10 dargestellten um 180° gedreht ist. Die Reinigungseinrichtung 5 weist einen Drehwinkelantrieb 503 auf, der an der kopfseitigen Deckplatte 9 befestigt ist. An dem Drehwinkelantrieb 503, der vorzugsweise pneumatisch gesteuert ist und dessen Bewegung über das Bedien- und Steuerpult 12 einstellbar ist, ist eine mit dem Drehwinkelantrieb 503 in eine Schwenkbewegung von zumindest 180° versetzbare schwenkbare Achse 502 gelagert, und zwar mittig. An der Achse 502 sind endseitig an Drehpunkten 507 zwei Gelenkstäbe 505 angelenkt. Die Drehstäbe 505 tragen an einem den Drehpunkten 507 gegenüberliegenden Ende jeweils eine Druckluftdüse 501, die über Druckluftschläuche 504 mit einem nicht dargestellten Druckluftreservoir in Verbindung stehen. Darüber hinaus sind die Gelenkstäbe 505 jeweils mit einer Kolben-ZylinderEinheit 506 verbunden, deren anderes Ende etwa an einem Zentrum der schwenkbaren Achse 502 gelagert ist. Die Kolben-Zylinder-Einheiten 506 sind pneumatisch betätigbar und können gleichzeitig zu einer Dreh- oder Schwenkbewegung der Achse 502 ein- und ausgefahren werden. Dadurch ist es möglich, eine vorgegebene kreisförmige Fläche, insbesondere ein oberes Ende 202 oder ein unteres Ende 201 eines zu reinigenden Gegenstandes 2 vollflächig bzw. in kurzer Zeit vollständig mit Druckluft zu beaufschlagen, sodass eine gute Reinigungswirkung erzielt wird. Dabei kann eine Beaufschlagung eines oberen Endes 202 und eines unteren Endes 201 des Gegenstandes 2 so erfolgen, dass die von oben und unten angreifenden Luftstrahlen jeweils auf einer Achse liegen. Möglich ist es aber auch, dass die Reinigungseinrichtung 5 oberhalb des oberen Endes 202 des Gegenstandes 2 versetzt zu einer unterhalb der Auflagefläche 10 angeordneten und operierenden Reinigungseinrichtung 5 betrieben wird. Der jeweilige Betriebsmodus, der über das Bedien- und Steuerpult 12 einstellbar ist, richtet sich vornehmlich nach dem Aufbau des zu reinigenden Gegenstandes 2, bei dem es sich beispielsweise um einen Wall-flow-Filter oder auch einen offenporigen Metallschaumfilter handeln kann.

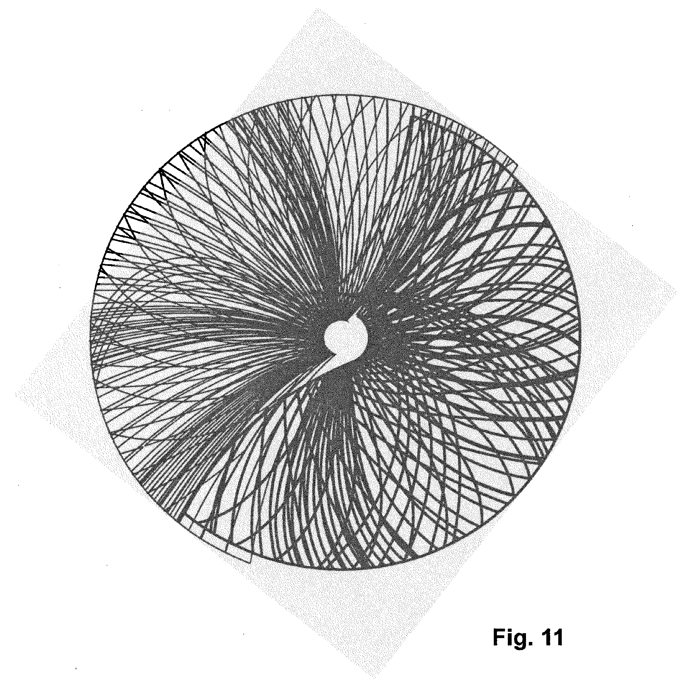

In Fig. 11 sind Projektionen der von den Druckluftdüsen 501 beispielsweise am oberen Ende 202 des Gegenstandes 2 erzeugten Beaufschlagungslinien bei einem Schwenken der Achse 502 und gleichzeitigem Ein- und Ausfahren der Gelenkstäbe 505 dargestellt. Wie ersichtlich ist, wird im Wesentlichen eine gesamte Fläche des Gegenstandes 2 mit Druckluft beaufschlagt. Sofern erforderlich, kann der Gegenstand 2 während des Reinigungsprozesses auch minimal verschoben werden, sodass auch ein Zentrum mit Druckluft beaufschlagt wird. Alternativ ist es auch möglich, dass die Reinigungseinrichtung 5 geringfügig parallel zur Oberfläche des zu reinigenden Gegenstandes 2 verschoben wird, damit die aus den Druckluftdüsen 501 ausströmende Druckluft auch das Zentrum erfasst.

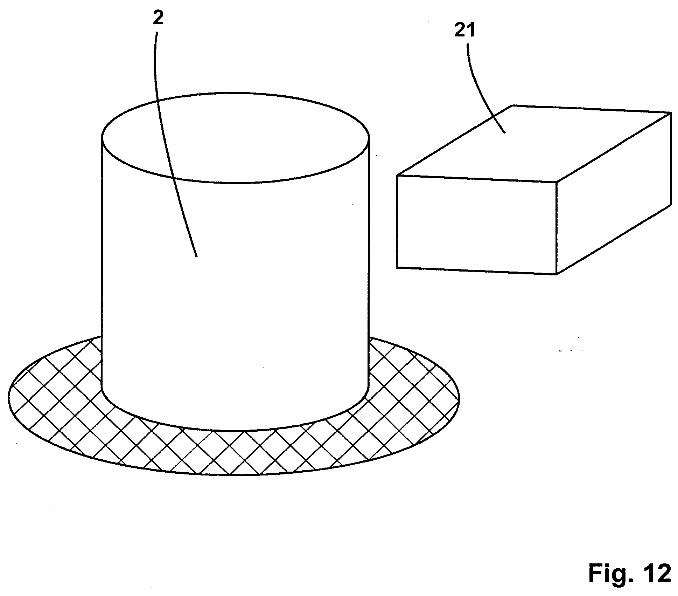

Neben den bereits erwähnten Komponenten kann eine erfindungsgemäße Vorrichtung 1 insbesondere zu Diagnose- bzw. Prüfzwecken noch weitere Einheiten enthalten. In Fig. 12 ist beispielsweise grob schematisiert dargestellt, dass die Vorrichtung 1 des Weiteren ein Beschriftungsgerät 21 umfassen kann, das ebenfalls innerhalb des Gehäuses 3 angeordnet ist. Mit dem Beschriftungsgerät 21 lässt sich ein gereinigter und untersuchter Gegenstand 2 kennzeichnen. Bei entsprechender Kennzeichnung kann der Gegenstand 2 bei einer nochmaligen Reinigung wiedererkannt bzw. identifiziert werden. Es können dann ohne Weiteres Kennwerte des Gegenstandes 2 im ursprünglichen Zustand oder nach einer vorherigen Reinigung mit den aktuellen Kennwerten verglichen werden. Beispielsweise lässt sich ein Vergleich ziehen, ob der Gegenstand 2 nach erfolgter Reinigung wieder dasselbe Gewicht aufweist, wie nach einer vorherigen Reinigung oder im ursprünglichen Zustand. Ist das Gewicht höher, so kann daraus geschlossen werden, dass im Gegenstand 2 beispielsweise noch Rußpartikel oder Ascheteilchen vorhanden sind, die sich mit der Reinigungseinrichtung 5 nicht entfernen lassen. Zusätzlich zum Beschriftungsgerät 21 oder gegebenenfalls in dieses integriert kann auch eine Leseeinrichtung vorgesehen sein, damit die Kennzeichnung des Gegenstandes 2, beispielsweise ein Barcode, ausgelesen und am Bedien- und Steuerpult 12, über welches bereits gespeicherte Daten zugänglich sind, ausgegeben werden kann.

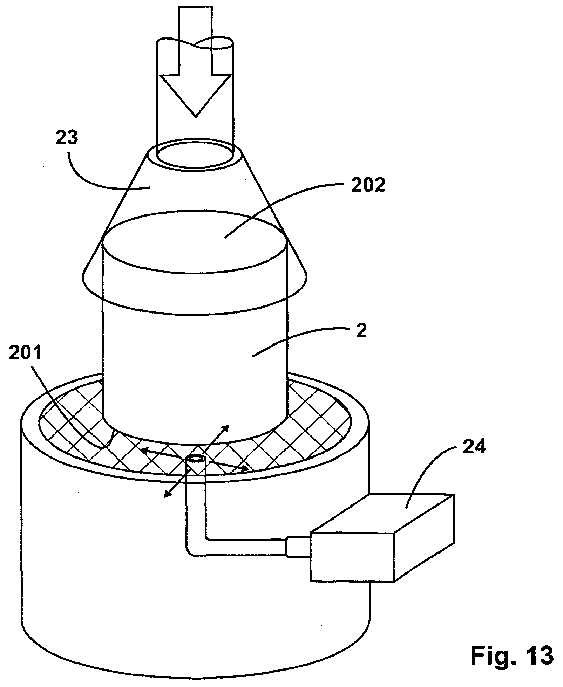

In Fig. 13 ist eine weitere Einheit zur Diagnose eines gereinigten Gegenstandes 2 stark schematisiert dargestellt. Die Einheit umfasst eine Einrichtung 23 mit einer Zuleitung und einem daran anschließenden kegelstumpfförmigen Ende, das auf einen Gegenstand 2 aufsetzbar ist, sodass dessen gesamtes oberes Ende 202 abgedeckt ist. Die Einrichtung 23 ist innerhalb des Gehäuses 3 angeordnet und kann bei Bedarf eingeschwenkt werden. Unterhalb der Auflagefläche 10 ist eine ebenfalls einschwenkbare Messeinrichtung 24 vorgesehen, mit welcher eine Anzahl von Partikeln in einem Luftstrom detektierbar ist. Bei der Prüfung wird über die Einrichtung 23 ein Gas mit einem definierten Gehalt von Rußpartikeln eingeblasen. Mit der Messeinrichtung 24 wird festgestellt, ob der Gegenstand 2 den Anforderungen an eine Adsorption von Rußpartikeln genügt.

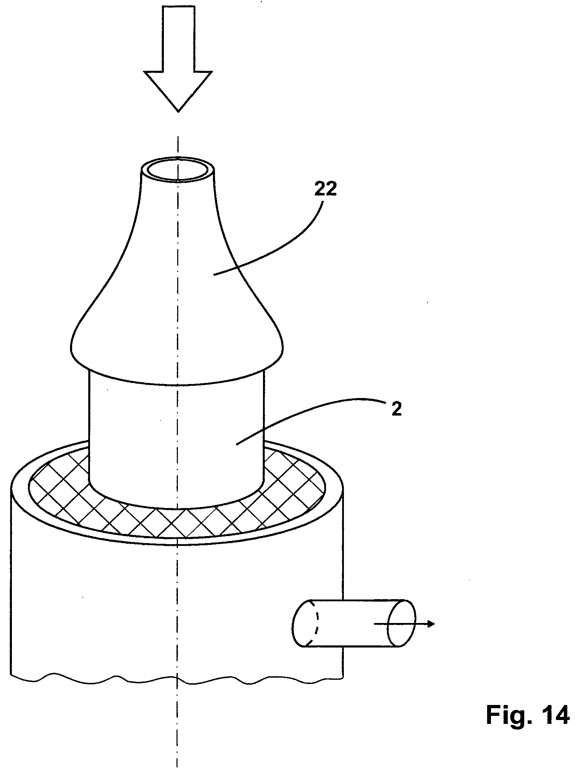

In Fig. 14 ist eine weitere Einheit gezeigt, die optional vorgesehen sein kann. Bei der Einheit handelt es sich um eine Einrichtung 22 zum Einblasen eines heißen Gases in den Gegenstand 2. Diese Einrichtung 22 kommt insbesondere dann zum Einsatz, wenn festgestellt wird, dass ein optimales Gewicht des Gegenstandes 2 noch nicht gegeben ist bzw. aus einem gemessenen Gewicht geschlossen wird, dass im Gegenstand 2 noch Partikel, beispielsweise Rußpartikel und/oder Ascheteilchen, vorhanden sein müssen. In diesem Fall wird die Einrichtung 22 aufgesetzt und über eine nicht dargestellte Zuleitung der Gegenstand 2 im Bereich des oberen Endes 202 vollflächig mit einem heißen Gas beaufschlagt, dessen Zusammensetzung so gewählt wird, dass dieses mit der vermuteten Partikelsorte möglichst vollständig reagiert.

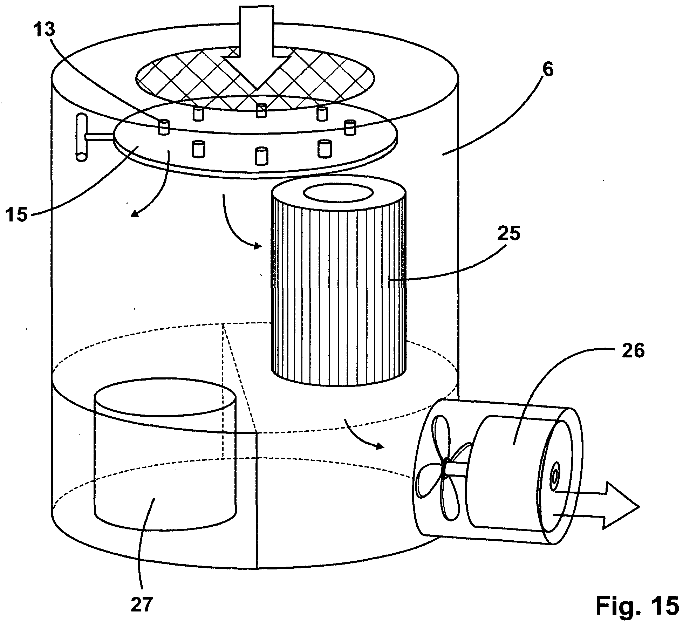

In Fig. 15 ist der Sockel 6 näher dargestellt. Der Sockel 6 umfasst neben der bereits erläuterten Platte 15 mit den darauf angeordneten Lichtquellen 13 einen Filter 25. Dieser Filter 25 dient dazu, bei Einsatz der Reinigungseinrichtung(en) 5 die Abluft zu filtern, sodass kein ungereinigtes Gas die Vorrichtung 1 verlässt. Des Weiteren ist, dem Filter 25 nachgeordnet, ein Unterdruckgebläse 26 vorgesehen. Mit dem Unterdruckgebläse 26 wird die in die Vorrichtung 1 eingebrachte Druckluft durch den Filter 25 hindurch abgesaugt. Ferner ist ein Staubsammelbehälter 27 vorgesehen, der tiefer als der Filter 25 liegt. Der Filter 25 wie auch der Staubsammelbehälter 27, aber für den Fall einer Reparatur auch das Unterdruckgebläse 26 sind durch Öffnen der Türen 17, 18 frei zugänglich.

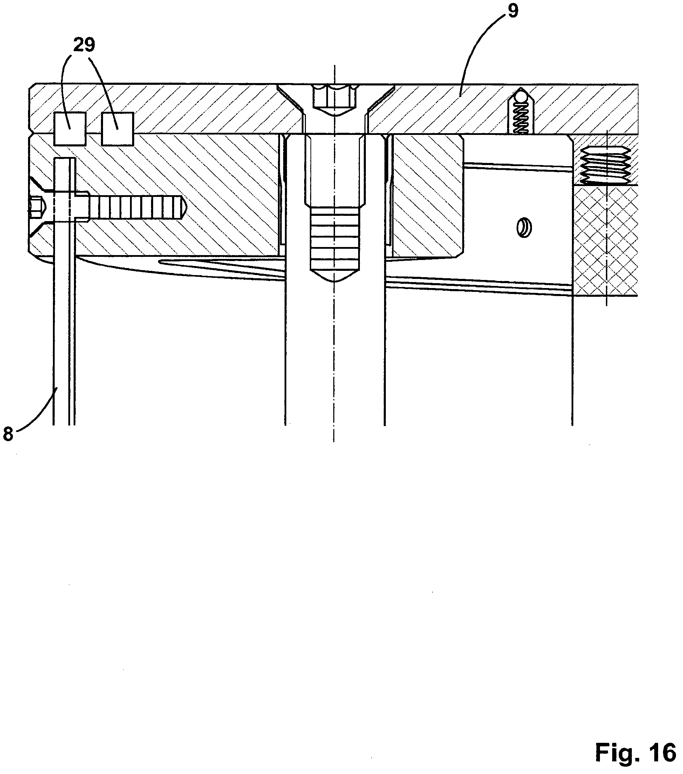

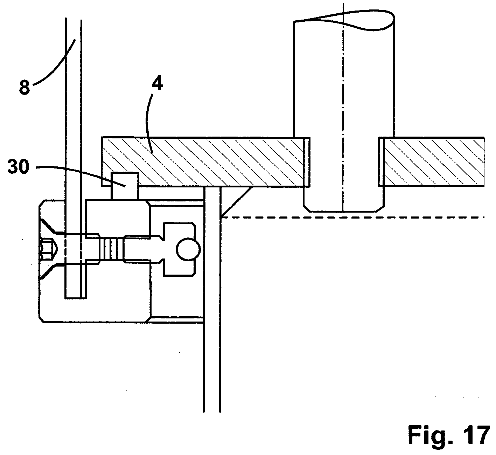

In Fig. 16 und 17 sind Dichtungsanordnungen im Bereich einer kopfseitigen Deckplatte 9 sowie eines unteren Endes des Mantels 8 dargestellt. Der Mantel 8 weist an einem der kopfseitigen Deckplatte 9 zugewandten Ende zwei Dichtungsringe 29 auf, die bei Anschlag des Mantels 8 an die kopfseitige Deckplatte 9 für eine Dichtung sorgen. Ähnlich ist an einem unteren Ende des Mantels 8 eine ringförmige Dichtung 30 vorgesehen, die zur Basis 4 hin dichtend wirkt. Wird somit der Mantel 8 vertikal nach oben verfahren, schlagen die Dichtungen 29, 30 an der kopfseitigen Deckplatte 9 bzw. an der Basis 4 an und sorgen so für die gewünschte Abdichtung der Vorrichtung 1 bei einem Reinigungsprozess.

Die Vorrichtung 1 kann darüber hinaus noch weitere Komponenten umfassen, beispielsweise einen Sensor zur Detektion von brennbaren Medien im Gegenstand 2, und kann gegebenenfalls mit einem separaten Ofen, der für eine allfällige zusätzliche Nachbehandlung eingesetzt wird, Teil einer größeren Anlage sein.

Ein Reinigungsprozess mit der Vorrichtung 1 läuft wie folgt ab: Zuerst erfolgt eine Eingangsprüfung des zu reinigenden Gegenstandes 2 mit Wägung und Beschriftung, damit die entsprechenden Daten bei einer neuerlichen Wartung zurückverfolgt werden können. Des Weiteren erfolgt eine Detektion von brennbaren Medien, da kein Kraftstoff oder Motoröl im zu reinigenden Gegenstand 2 vorhanden sein sollte. Sofern dies dennoch der Fall ist, wird dies durch den Detektor erkannt und am Bedien- und Steuerpult 12 durch Anzeige ausgegeben. Dies bedingt in der Folge einen geänderten Prozessablauf, wobei der Gegenstand 2 gegebenenfalls vorzureinigen ist. Des Weiteren werden die Daten des Gegenstandes 2, insbesondere dessen Gewicht, mit den Daten des Neuzustandes und/oder den Daten nach einer vorherigen Reinigung, sofern verfügbar, verglichen. Aus einem Differenzgewicht wird eine Ruß- oder Aschebeladung berechnet. Danach wird mit der Beobachtungseinrichtung 28 die Geometrie des Gegenstandes 2 vermessen, insbesondere Größe und Form des Gegenstandes 2. In diesem Schritt wird auch eine Grobverschmutzung mit der Beobachtungseinrichtung 28, in der Regel eine Kamera festgestellt, indem eine Bilddatenauswertung erfolgt. Das Ergebnis der Bilddatenauswertung ist Grundlage für ein anschließend laufendes Reinigungsprogramm. In diesem Schritt der Prüfung des Gegenstandes 2 können auch bereits allfällige Fehlstellen wie Risse erkannt werden. Nach Errechnung des Reinigungsprogrammes werden Endanschläge für die Reinigungseinrichtung 5 bzw. eine Bewegung der Druckluftdüsen 501 in einer Ebene oberhalb und unterhalb des Gegenstandes 2 berechnet. Anschließend startet eine Reinigung mit den Reinigungseinrichtungen 5. Während des Reinigungsprozesses wird stets eine Veränderung des Gewichtes gemessen. Des Weiteren kann auch vorgesehen sein, dass eine Differenzdruckmessung erfolgt, um einen Rußausstoß bzw. eine verlaufende Reinigung kontinuierlich zu verfolgen. Sobald beispielsweise der Rußausstoß oder das Gewicht innerhalb vorgegebener Toleranzen konstant bleibt, wird dieser erste Reinigungsschritt beendet. Es wird dann entschieden, ob der Gegenstand 2 einer Nachreinigung zu unterziehen ist, beispielsweise durch Beaufschlagung mit einem heißen, reaktiven Gas. Möglich ist es auch, als Alternative, dass der Gegenstand 2 aus der Vorrichtung 1 entnommen und in einem separaten Ofen erhitzt wird, um allfällige Rückstände zu verbrennen. Anschließend erfolgt nochmals eine Gewichtskontrolle sowie eine weitere Feinreinigung mit Druckluft, wobei in der Regel ein Reinigungsgrad von größer als 95 % erreicht wird. Danach wird noch eine Durchlichtprüfung mittels der zumindest einen Lichtquelle 13 und bevorzugt einer Kamera durchgeführt, um unter anderem Fehlstellen im Gegenstand 2 zu erkennen. In einem letzten Schritt erfolgt eine Dokumentation der Ergebnisse, die über das Bedien- und Steuerpult 12 abgespeichert werden können. Des Weiteren kann der Gegenstand 2 mit dem Beschriftungsgerät 21 als gereinigt gekennzeichnet werden. Vorzugsweise wird zugleich auch ein Barcode oder eine andere Kennzeichnung des Gegenstandes 2 aufgebracht, sodass zu einem späteren Zeitpunkt eine eindeutige Identifikation des Gegenstandes 2 möglich ist.

## Patentansprüche

1. Vorrichtung (1) zum Reinigen eines Gegenstandes (2) wie eines Filters oder Katalysators, der von einem Gas durchströmbar ist, insbesondere eines in einem Abgastrakt eines Kraftfahrzeuges eingesetzten Partikelfilters oder Katalysators, umfassend ein verschließbares Gehäuse (3), eine innerhalb des Gehäuses (3) angeordnete Basis (4), auf welcher oder mit welcher der Gegenstand (2) positionierbar ist, und zumindest eine innerhalb des Gehäuses (3) angeordnete Reinigungseinrichtung (5), mit welcher im Gegenstand (2) adsorbierte Feststoffe und/oder Flüssigkeiten entfernbar sind, **dadurch gekennzeichnet, dass** innerhalb des Gehäuses (3) zumindest eine Waage, mit welcher ein Gewicht des Gegenstandes (2) vor einem Beginn eines Reinigungsprozesses feststellbar und während des Reinigungsprozesses eine durch die Reinigung verursachte Gewichtsabnahme des Gegenstandes (2) kontinuierlich verfolgbar ist, und eine Reinigungseinrichtung (5) oberhalb und eine Reinigungseinrichtung (5) unterhalb der Basis (4) angeordnet ist, um den Gegenstand (2) von zwei Seiten zu reinigen, und optional zumindest eine Einrichtung zum Erkennen von Fehlstellen wie Rissen und/oder Löchern im Gegenstand (2) vorgesehen ist.

2. Vorrichtung (1) nach Anspruch 1, **dadurch gekennzeichnet, dass** das Gehäuse (3) einen Sockel (6) aufweist, auf dem ein oberes Gehäuseteil (7) befestigt ist, wobei die Basis (4) im oberen Gehäuseteil (7) angeordnet ist und optional im Sockel (6) ein Filter (25) und diesem nachgeordnet ein Unterdruckgebläse (26) angeordnet sind, wobei bevorzugt im Sockel (6) bodenseitig ein Staubsammelbehälter (27) vorgesehen ist, wobei der Staubsammelbehälter (27) unterhalb des Filters (25) angeordnet ist.

3. Vorrichtung (1) nach Anspruch 2, **dadurch gekennzeichnet, dass** das obere Gehäuseteil (7) einen vertikal verschiebbaren oder öffenbaren, insbesondere durchsichtigen, Mantel (8) aufweist, sodass die Basis (4) zugänglich ist und/oder der Sockel (6) mit einem geringeren Querschnitt als der Mantel (8) ausgebildet und der Mantel (8) über den Sockel (6) nach unten verschiebbar ist.

4. Vorrichtung (1) nach Anspruch 3, **dadurch gekennzeichnet, dass** das obere Gehäuseteil (7) eine kopfseitige Deckplatte (9) aufweist, die mit dem Sockel (6) starr verbunden ist und einen dichtenden Anschlag für den Mantel (8) bildet.

5. Vorrichtung (1) nach einem der Ansprüche 1 bis 4, **dadurch gekennzeichnet, dass** die Basis (4) eine waagrechte, insbesondere teilweise licht- und gasdurchlässige, Auflagefläche (10) zur Positionierung des Gegenstandes (2) umfasst, wobei bevorzugt seitlich der Auflagefläche (10) ein oder mehrere Befestigungsmittel (11) zur Fixierung des Gegenstandes vorgesehen sind.

6. Vorrichtung (1) nach Anspruch 5, **dadurch gekennzeichnet, dass** die Auflagefläche (10) als Gitter ausgebildet ist.

7. Vorrichtung (1) nach Anspruch 5 oder 6, **dadurch gekennzeichnet, dass** unterhalb der Auflagefläche (10) zumindest eine Lichtquelle (13) zur Bestrahlung eines unteren Endes (201) des Gegenstandes (2) vorgesehen ist und im Gehäuse (3) oberhalb der Auflagefläche (10) zumindest ein Spiegel (14) angeordnet ist, mit welchem ein oberes Ende (202) des Gegenstandes (2) bei Bestrahlung des unteren Endes (201) des Gegenstandes (2) außerhalb des Gehäuses (3) beobachtbar ist.

8. Vorrichtung (1) nach Anspruch 5 oder 6, **dadurch gekennzeichnet, dass** unterhalb der Auflagefläche (10) zumindest eine Lichtquelle (13) zur Bestrahlung eines unteren Endes (201) des Gegenstandes (2) vorgesehen ist und im Gehäuse (3) oberhalb der Auflagefläche (10) zumindest eine Kamera oder ein lichtempfindlicher Sensor angeordnet ist, mit welcher bzw. mit welchem ein Bild des oberen Endes (202) des Gegenstandes (2) bei Bestrahlung des unteren Endes (201) des Gegenstandes (2) aufnehmbar und außerhalb des Gehäuses (3) auf einem Display darstellbar ist.

9. Vorrichtung (1) nach einem der Ansprüche 5 bis 8, **dadurch gekennzeichnet, dass** die Auflagefläche (10) waagrecht aus dem Gehäuse (3) schwenkbar ist und eine Arretierung vorgesehen ist, mit welcher die Auflagefläche (10) in einer eingeschwenkten Position innerhalb des Gehäuses (3) lösbar fixierbar ist.

10. Vorrichtung (1) nach einem der Ansprüche 1 bis 9, **dadurch gekennzeichnet, dass** die Basis (4) mit einer Waage ausgebildet oder auf einer Waage gelagert ist.

11. Vorrichtung (1) nach einem der Ansprüche 1 bis 10, **dadurch gekennzeichnet, dass** die Reinigungseinrichtung (5) eine oder mehrere oberhalb und/oder unterhalb der Basis (4) angeordnete, insbesondere mittelbar oder unmittelbar an einer drehbaren oder schwenkbaren Achse (502), bevorzugt über schwenkbare Gelenkstäbe (505) gelagerte, Druckluftdüsen (501) aufweist, die in einer Ebene über oder unter der Basis (4) bewegbar gelagert sind und mit einem Druckluftreservoir zur Anspeisung der Druckluftdüsen (501) in Verbindung stehen.

12. Vorrichtung (1) nach Anspruch 11, **dadurch gekennzeichnet, dass** zwei Gelenkstäbe (505) mit jeweils einer Druckluftdüse (501) vorgesehen sind, wobei die Gelenkstäbe (505) endseitig an der Achse (502) gelagert sind, und vorzugsweise pneumatisch betätigte Kolben-Zylinder-Einheiten (506) vorgesehen sind, die an der Achse (502) befestigt sind und mit den Gelenkstäben (505) in Verbindung stehen, um diese zu schwenken.

13. Vorrichtung (1) nach einem der Ansprüche 1 bis 12, **dadurch gekennzeichnet, dass** innerhalb des Gehäuses (3) ein Beschriftungsgerät (21) zum Kennzeichnen des Gegenstandes (2) angeordnet ist.

14. Vorrichtung (1) nach einem der Ansprüche 1 bis 13, **dadurch gekennzeichnet, dass** innerhalb des Gehäuses (3) zumindest eine auf den Gegenstand (1) anstellbare Einrichtung (22) zum Durchblasen eines heißen Gases durch den Gegenstand (2) vorgesehen ist.

15. Vorrichtung (1) nach einem der Ansprüche 1 bis 14, **dadurch gekennzeichnet, dass** eine Einrichtung (23) zum Einblasen von Partikeln an einem oberen Ende (202) des Gegenstandes (2) und eine Messeinrichtung (24) zur Messung von an einem unteren Ende (201) des Gegenstandes (2) austretenden Partikeln vorgesehen ist.

## Claims

1. A device (1) for cleaning an object (2) such as a filter or catalytic converter through which a gas flows, more particularly a particle filter or catalytic converter inserted in an exhaust system of a motor vehicle, comprising a closable housing (3), a base (4) which is arranged within the housing (3) on which or with which the object (2) can be positioned, and at least one cleaning device (5) which is arranged within the housing (3) and with which solids and/or liquids adsorbed in the object (2) can be removed, **characterised in that** arranged within the housing (3) is at least one balance with which a weight of the object (2) can be determined before the start of a cleaning process and a reduction in weight of the object (2) caused by the cleaning can be continuously monitored, and one cleaning device (5) is arranged above and one cleaning device (5) below the base (4) in order to clean the object (2) from two sides, and optionally at least one device for detecting fault points such as cracks and/or holes in the object (2) is provided.

2. The device (1) according to claim 1, **characterised in that** the housing (3) has a pedestal (6) on which an upper housing section (7) is attached, wherein the base (4) is arranged in the upper housing section (7) and optionally a filter (25) and a vacuum blower (26) downstream thereof are arranged in the pedestal (6), wherein at the base side in the pedestal (6) a dust collection container (27) is preferably provided, wherein the dust collection container (27) is arranged underneath the filter (25).

3. The device (1) according to claim 2, **characterised in that** the upper housing section (7) has a vertically movable or openable, more particularly transparent, cladding (8) so that the base (4) is accessible and/or the pedestal (6) is designed with a smaller cross-section than the cladding (8) and the cladding (8) can be moved downwards over the pedestal (6).

4. The device (1) according to claim 3, **characterised in that** at its top the upper housing section (7) has a cover plate (9) which is rigidly connected to the pedestal (6) and forms a sealing stop for the cladding (8).

5. The device (1) according to any one of claims 1 to 4, **characterised in that** the base (4) comprises a horizontal partially light and gas-permeable support surface (10) for positioning the object (2), wherein preferably to the side of the support surface (10) one or more fastening means (11) for attaching the object are provided.

6. The device (1) according to claim 5, **characterised in that** the support surface (10) is designed as a grid.

7. The device (1) according to claim 5 or 6, **characterised in that** underneath the support surface (10) at least one light source (13) is provided for illuminating a lower end (201) of the object (2) and in the housing (3) above the support surface (10) at least one mirror (14) is arranged with which an upper end (202) of the object (2) can be observed outside the housing (3) when the lower end (201) of the object (2) is illuminated.

8. The device (1) according to claim 5 or 6, **characterised in that** underneath the support surface (10) at least one light source (13) for illuminating a lower end (201) of the object (2) is provided and in the housing (3), above the support surface (10) at least one camera or a light-sensitive sensor is arranged with which a picture of the upper end (202) of the object (2) can be taken on illumination of the lower end (201) of the object (2) and displayed outside the housing (3) on a display.

9. The device (1) according to any one of claims 5 to 8, **characterised in that** the support surface (10) can be pivoted horizontally out of the housing (3) and stopping means are provided with which the support surface (10) can be detachably fixed in an pivoted-in position inside the housing (3).

10. The device (1) according to any one of claims 1 to 9, **characterised in that** the base (4) is designed with a balance or is supported on a balance.

11. The device (1) according to any one of claims 1 to 10, **characterised in that** the cleaning device (5) has one or more compressed air nozzles (501) arranged above and/or below the base (4), which are, in particular, directly or indirectly supported on a rotating or pivoting axle (502), preferably by means of toggle links (505) and are moveable in a plane above or below the base (4) and are connected to a compressed air reservoir for suppling the compressed air nozzles (501).

12. The device (1) according to claim 11, **characterised in that** two toggle links (505) are each provided with one compressed air nozzle (501), wherein at their ends the toggle links (505) are supported on the axle (502), and, preferably pneumatically-operated piston-cylinder units (506) are provided which are attached to the axle (502) and are connected to the toggle links (505) in order to pivot the latter.

13. The device (1) according to any one of claims 1 to 12, **characterised in that** inside the housing (3) a labelling device (21) for marking the object (2) is arranged.

14. The device (1) according to any one of claims 1 to 13, **characterised in that** within the housing (3) at least one device (22) that can be applied to the object (1) is provided in order to blow a hot gas through the object (2).

15. The device (1) according to any one of claims 1 to 14, **characterised in that** a device (23) for blowing in particles is provided at an upper end (202) of the object (2) and a measuring device (24) for measuring particles emerging from a lower end (201) of the object (2) is provided.

## Revendications

1. Dispositif (1) de nettoyage d'un objet (2) comme un filtre ou un catalyseur, qui dans lequel peut passer du gaz, en particulier un filtre à particules ou un catalyseur inséré dans un circuit de gaz d'échappement d'un véhicule automobile, comprenant un boîtier fermant (3), une base (4) disposée à l'intérieur du boîtier (3) et sur laquelle ou grâce à laquelle l'objet (2) peut être positionné, et au moins un dispositif de nettoyage (5) disposé à l'intérieur du boîtier (3) et grâce auquel les matières solides et/ou liquides adsorbées dans l'objet (2) peuvent être éliminées, **caractérisé en ce que**, à l'intérieur du boîtier (3), est disposée au moins une balance permettant d'établir un poids de l'objet (2) avant un début de processus de nettoyage et de suivre en continu, pendant le processus de nettoyage, une perte de poids due au nettoyage de l'objet (2), et un dispositif de nettoyage (5) est disposé au-dessus et un dispositif de nettoyage (5) en-dessous de la base (4) pour nettoyer l'objet (2) par les deux côtés et il est prévu en option au moins un dispositif de détection de points défectueux, comme des fissures et/ou des trous dans l'objet (2).

2. Dispositif (1) selon la revendication 1, **caractérisé en ce que** le boîtier (3) présente un socle (6) sur lequel est fixée une partie supérieure de boîtier (7), la base (4) étant disposée dans la partie supérieure de boîtier (7) et un filtre (25) étant disposé en option dans le socle (6) et étant disposée en aval de celui-ci une soufflerie à dépression (26), un récipient collecteur de poussière (27) étant prévu de préférence dans le socle (6) au niveau du fond, le récipient collecteur de poussière (27) étant disposé en-dessous du filtre (25).

3. Dispositif (1) selon la revendication 2, **caractérisé en ce que** la partie supérieure du boîtier (7) présente une chemise (8) déplaçable ou ouvrant verticalement, en particulier transparente, de sorte que la base (4) est accessible et/ou que le socle (6) est réalisé avec une section transversale inférieure à celle de la chemise (8) et que la chemise (8) peut être déplacée vers le bas au-dessus du socle (6).

4. Dispositif (1) selon la revendication 3, **caractérisé en ce que** la partie supérieure du boîtier (7) présente une plaque de recouvrement sommitale (9) qui est reliée de manière rigide au socle (6) et constitue une butée d'étanchéité pour la chemise (8).

5. Dispositif (1) selon une des revendications 1 à 4, **caractérisé en ce que** la base (4) comprend une surface d'appui horizontale (10), en particulier perméable à la lumière et au gaz, pour le positionnement de l'objet (2), étant de préférence prévus sur le côté de la surface d'appui (10) un ou plusieurs moyens de fixation (11) pour fixer l'objet.

6. Dispositif (1) selon la revendication 5, **caractérisé en ce que** la surface d'appui (10) se présente sous forme d'une grille.

7. Dispositif (1) selon la revendication 5 ou 6, **caractérisé en ce que**, en-dessous de la surface d'appui (10), il est prévu au moins une source lumineuse (13) pour irradier une extrémité inférieure (201) de l'objet (2) et que, dans le boîtier (3), au-dessus de la surface d'appui (10), est disposé au moins un miroir (14) grâce auquel une extrémité supérieure (202) de l'objet (2) peut être observée en irradiant l'extrémité inférieure (201) de l'objet (2) en dehors du boîtier (3).

8. Dispositif (1) selon la revendication 5 ou 6, **caractérisé en ce que**, en-dessous de la surface d'appui (10), il est prévu au moins une source lumineuse (13) pour irradier une extrémité inférieure (201) de l'objet (2) et que, dans le boîtier (3), au-dessus de la surface d'appui (10), est disposé au moins une caméra ou un capteur photosensible grâce à laquelle ou auquel une photo de l'extrémité supérieure (202) de l'objet (2) peut être prise en irradiant l'extrémité inférieure (201) de l'objet (2) et visualisée sur un écran en dehors du boîtier (3).

9. Dispositif (1) selon une des revendications 5 à 8, **caractérisé en ce que** la surface d'appui (10) peut pivoter horizontalement hors du boîtier (3) et qu'il est prévu un arrêt grâce auquel la surface d'appui (10) peut être fixée de manière dissociable dans une position pivotée à l'intérieur du boîtier (3).

10. Dispositif (1) selon une des revendications 1 à 9, **caractérisé en ce que** la base (4) est réalisée avec une balance ou posée sur une balance.

11. Dispositif (1) selon une des revendications 1 à 10, **caractérisé en ce que** le dispositif de nettoyage (5) présente une ou plusieurs buses à air comprimé (501) disposées au-dessus et/ou en-dessous de la base (4), s'appuyant en particulier indirectement ou directement sur un axe rotatif ou pivotable (502), de préférence via des barres articulées pivotables (505), et qui s'appuient de manière mobile dans un plan au-dessus ou en-dessous de la base (4) et sont en liaison avec un réservoir d'air comprimé permettant d'alimenter les buses à air comprimé (501).

12. Dispositif (1) selon la revendication 11, **caractérisé en ce qu'**il est prévu deux barres articulées (505) comportant chacune une buse à air comprimé (501), les barres articulées (505) s'appuyant par leurs extrémités à l'axe (502) et qu'il est prévu des unités à piston et cylindre (506), de préférence à actionnement pneumatique, qui sont fixées à l'axe (502) et sont en liaison avec les barres articulées (505) pour faire pivoter celles-ci.

13. Dispositif (1) selon une des revendications 1 à 12, **caractérisé en ce que**, à l'intérieur du boîtier (3), est disposé un appareil de marquage (21) pour l'identification de l'objet (2).

14. Dispositif (1) selon une des revendications 1 à 13, **caractérisé en ce que**, à l'intérieur du boîtier (3), il est prévu au moins un dispositif (1) pouvant être approché de l'objet (22) pour souffler un gaz chaud à travers l'objet (2).

15. Dispositif (1) selon une des revendications 1 à 14, **caractérisé en ce qu'**il est prévu un dispositif (23) de soufflage de particules à une extrémité supérieure (202) de l'objet (2) et un dispositif de mesure (24) pour mesurer les particules sortant par une extrémité inférieure (201) de l'objet (2).
